# EUROPÄISCHE PATENTSCHRIFT

(11) **EP 3 220 160 B1**
(45) Veröffentlichungstag und Bekanntmachung des Hinweises auf die Patenterteilung: **11.12.2019**
(21) Anmeldenummer: 16160065.5
(22) Anmeldetag: 14.03.2016
(51) Int. Cl.: G01S 7/48, G01S 7/481, G01S 17/93, G01S 17/42, G01S 17/89

(54) **FLUGGERÄT MIT LASERSCANNER**
FLYING DEVICE WITH LASER SCANNER
AERONEF EQUIPE D'UN LECTEUR LASER

(43) Veröffentlichungstag der Anmeldung: 20.09.2017
(73) Patentinhaber: Riegl Laser Measurement Systems GmbH, 3580 Horn (AT)
(72) Erfinder: STUDNICKA, Nikolaus, 1190 Wien (AT); REICHERT, Rainer, 3580 Horn (AT); PFENNIGBAUER, Martin, 3430 Tulln (AT); ULLRICH, Andreas, 3003 Gablitz (AT)
(74) Vertreter: Weiser & Voith Patentanwälte Partnerschaft

(56) Entgegenhaltungen:
- EP-A1- 3 081 957
- DE-A1-102014 211 050
- US-A- 5 598 263
- US-A1- 2010 208 235
- US-A1- 2014 132 600
- US-A1- 2016 047 895
- US-B1- 6 208 270
- IVAN DRYANOVSKI ET AL: "An open-source pose estimation system for micro-air vehicles", ROBOTICS AND AUTOMATION (ICRA), 2011 IEEE INTERNATIONAL CONFERENCE ON, IEEE, 9. Mai 2011 (2011-05-09), Seiten 4449-4454, XP032034136, DOI: 10.1109/ICRA.2011.5980315 ISBN: 978-1-61284-386-5
- KWANGJIN YANG ET AL: "Model predictive unified planning and control of rotary-wing unmanned aerial vehicle", CONTROL, AUTOMATION AND SYSTEMS (ICCAS), 2012 12TH INTERNATIONAL CONFERENCE ON, IEEE, 17. Oktober 2012 (2012-10-17), Seiten 1974-1979, XP032291533, ISBN: 978-1-4673-2247-8

## Beschreibung

Die vorliegende Erfindung betrifft ein Fluggerät mit einem Laserscanner zum Vermessen einer Umgebung gemäß dem Oberbegriff des Anspruchs 1.

Aus dem Stand der Technik ist bekannt, Fluggeräte mit Laserscannern auszustatten, um die überflogene Umgebung mittels vom Laserscanner ausgesandter Laserstrahlen anhand deren Reflexionen an der Umgebung zu vermessen. Ein dafür besonders geeigneter Typ von Laserscannern sendet Laserstrahlen in Form einer Scanscheibe aus, um die Umgebung linienförmig quer zur Flugrichtung zu vermessen. Durch die Bewegung des Fluggeräts und das wiederholte linienförmige Scannen der Umgebung kann ein 3D-Modell der Umgebung gewonnen werden. Derartige Laserscanner sind beispielsweise unter der Marke VUX® von der Firma Riegl Laser Measurement Systems GmbH in Horn, Österreich, bekannt.

Ein Fluggerät gemäß dem Oberbegriff des Anspruchs 1 ist in der nicht-vorveröffentlichten Europäischen Patentanmeldung EP 3 081 957 A1 beschrieben, welche einen Stand der Technik nach Artikel 54 (3) EPÜ darstellt.

Ivan Dryanovski et al., in "An open-source pose estimation system for micro-air vehicles", International Conference on Robotics and Automation (ICRA) 2011, IEEE, 9. Mai 2011, Seiten 4449-4454, ISBN 978-1-61284-386-5, beschreiben einen Multikopter mit einem daran montierten 2D-Laserscanner, welcher einen 270°-Laserscanfächer aussendet. Zur Höhenmessung wird ein Teil der Laserstrahlen des horizontal montierten Laserscanners mittels eines Spiegels nach unten umgelenkt, um das Bodenniveau und die Flughöhe zu vermessen.

Aus dem Stand der Technik ist es auch bekannt, Fluggeräte mit Kollisionswarnsystemen auszustatten, z.B. auf Funk- oder Radarbasis, um die Flugsicherheit zu erhöhen. Solche Kollisionswarnsysteme bedeuten jedoch auch immer zusätzliches Gewicht und damit erhöhten Treibstoff- bzw. Energiebedarf, was speziell bei kleinen, unbemannten Fluggeräten prohibitiv für einen Einsatz ist.

Die Erfindung setzt sich zum Ziel, ein Fluggerät mit einem Laserscanner zum Vermessen einer Umgebung zu schaffen, das erhöhte Sicherheit im Flugbetrieb ohne nennenswerte Gewichtserhöhung bietet, so dass es sich besonders für eine Ausführung als hochmobiles, leichtgewichtiges, unbemanntes Vermessungsfluggerät eignet.

Dieses Ziel wird mit einem Fluggerät mit einem Laserscanner zum Vermessen einer Umgebung erreicht, wobei der Laserscanner dazu ausgebildet ist, Laserstrahlen mit unterschiedlichen Aussendewinkeln um eine Achse auszusenden,
wobei ein Spiegel im Strahlengang der Laserstrahlen eines vorbestimmten Teilbereichs von Aussendewinkeln angeordnet ist,
wobei der Laserscanner dazu ausgebildet ist, die Laufzeiten sowohl von innerhalb des genannten Teilbereichs ausgesandten Laserstrahlen als auch von außerhalb des genannten Teilbereichs ausgesandten Laserstrahlen anhand deren Reflexionen an der Umgebung zu ermitteln,
welches Fluggerät sich dadurch auszeichnet, dass der Spiegel die im genannten Teilbereich ausgesandten Laserstrahlen in eine Ebene ablenkt, die zu einer vorbestimmten horizontalen Flugrichtung parallel ist,
wobei der genannte Teilbereich jene Laserstrahlen umfasst, die ohne Spiegel vom Fluggerät reflektiert würden.

Das erfindungsgemäße Fluggerät mit integriertem Laserscanner, der sowohl die Umgebung vermisst als auch als Kollisionswarnsystem agiert, ist durch die gleichzeitige Verwendung seiner Komponenten für mehrere Zwecke besonders leichtgewichtig und platzsparend. Mit Hilfe des genannten Spiegels kann ein Teil des/der vom Laserscanner zum Erstellen des Umgebungsmodells erzeugten Scanfächers bzw. Scanscheibe gleichsam "ausgekoppelt" und als (Teil-)Scanfächer zur Kollisionswarnung eingesetzt werden. Der ausgekoppelte (Teil-)Scanfächer kann beispielsweise in einer Ebene liegen, die parallel zur Flugrichtung des Fluggeräts ist, um Objekte zu detektieren, die sich in der Flugbahn des Fluggeräts befinden. Der Spiegel kann sich dabei beispielsweise in einem Abschattungsbereich des Scanfächers bzw. der Scanscheibe zwischen Laserscanner und Fluggerät befinden, so dass Laserstrahlen, die ohnehin nicht zum Laservermessen der Umgebung verwertet werden könnten, da sie vom Fluggerät reflektiert würden, zur Kollisionsdetektion eingesetzt werden können. Weil der Spiegel die im genannten Teilbereich ausgesandten Laserstrahlen in eine Ebene ablenkt, die zur gewünschten Flugrichtung parallel ist, kann der Laserscanner im genannten Teilbereich zwecks Kollisionsvermeidung "vorausschauen".

Grundsätzlich könnte der Laserscanner die Laserstrahlen in unterschiedlichen Aussendewinkeln mit unterschiedlichen Laserquellen erzeugen. Besonders günstig ist es jedoch, wenn der Laserscanner die Laserstrahlen unterschiedlicher Aussendewinkel mittels eines einzigen, um die Achse rotierenden oder schwingenden Laserstrahls erzeugt. Dies ermöglicht die Verwendung von Laserscannern, die einen Laserstrahl aus einer einzigen Laserquelle erzeugen und beispielsweise mittels eines rotierenden Spiegels, Spiegelfacettenrades oder einer rotierenden Spiegelpyramide zu einem Scanfächer oder einer Scanscheibe ablenken.

Besonders bevorzugt ist der Laserscanner ein 360°-2D-Laserscanner. Unter einem "2D-Laserscanner" wird in der vorliegenden Beschreibung ein Laserscanner verstanden, dessen Laserabtaststrahl sich nur innerhalb einer einzigen Abtastebene bewegt, d.h. einen einzigen Strahlfächer auf die Umgebung aussendet, um aus der Reflexion ein 2D-Profil der Umgebung zu erstellen, welches der Schnittlinie der Abtastebene mit dem Umgebungsrelief entspricht. Unter einem "360°-2D-Laserscanner" wird in der vorliegenden Beschreibung ein 2D-Laserscanner verstanden, dessen Laserabtaststrahl in der Abtastebene um volle 360° rotiert, um eine volle (360°) Scanscheibe zu erzeugen. Durch Fortbewegen des Fluggeräts in einer abtastebenen-fremden (z.B. senkrecht auf den Scanfächer stehenden) Flugrichtung kann dann aus mehreren solchen aufeinanderfolgenden 2D-Profilen ein 3D-Abbild der Umgebung erstellt werden. Aus der vollen Scanscheibe des 360°-2D-Laserscanners kann dabei mittels der erfindungsgemäßen Anordnung des Spiegels der genannte Teilbereich für die Kollisionsdetektion als - entsprechend in die Detektionsrichtung umgelenkter - Scanfächer "herausgeschnitten" werden.

Das Fluggerät der Erfindung kann mit einer Detektionseinrichtung ausgestattet sein, welche ein Warnsignal ausgibt, wenn die Laufzeit zumindest eines innerhalb des genannten Teilbereichs ausgesandten Laserstrahls einen Schwellwert unterschreitet. Das Warnsignal kann optischer und/oder akustischer Art sein und direkt am Fluggerät zur Warnung des Piloten oder von Personen und Tieren in der Nähe des Fluggeräts abgegeben werden, oder aber im Falle eines unbemannten Fluggeräts über eine Funkverbindung an eine Fernbedienung für eine Person am Boden gesandt werden, die das Fluggerät steuert.

Alternativ oder zusätzlich kann die Detektionseinrichtung auch eine Geschwindigkeits- und/oder Richtungsänderung des Fluggeräts veranlassen, wenn die Laufzeit zumindest eines innerhalb des genannten Teilbereichs ausgesandten Laserstrahls einen Schwellwert unterschreitet. Dadurch kann z.B. eine automatische Geschwindigkeitsreduktion, ein "Anhalten" des Fluggeräts in der Luft oder ein automatisches Ausweichmanöver zur Kollisionsvermeidung mit dem detektierten Objekt bzw. der Umgebung bewirkt werden.

Die Detektionseinrichtung kann auch dazu ausgebildet sein, das Warnsignal auszugeben oder die Geschwindigkeits- und/oder Richtungsänderung des Fluggeräts veranlassen, wenn ein Mittelwert von Laufzeiten mehrerer innerhalb des genannten Teilbereichs ausgesandter Laserstrahlen einen Schwellwert unterschreitet. Die genannten mehreren Laserstrahlen können dabei entweder aus derselben Periode des Laserscanners stammen, d.h. örtlich "nebeneinander" liegen, um nur Objekte einer bestimmten Größe zu berücksichtigen, und/oder in mehreren Perioden des Laserscanners mit jeweils demselben Winkel ausgesandt worden sein, d.h. zeitlich "hintereinander" liegen, um die Anwesenheit eines Objekts zu verifizieren.

Bevorzugt ist die Detektionseinrichtung dazu ausgebildet, die Größe und/oder Form eines Objekts der Umgebung aus einer Folge von Laufzeiten verschiedener innerhalb des genannten Teilbereichs ausgesandter Laserstrahlen zu bestimmen und daraus das Objekt zu klassifizieren. Dadurch können z.B. durch einen Tabellenabgleich Vögel, Menschen oder Bäume im Flugraum erkannt werden. Je nach erkanntem Objekt kann eine unterschiedliche Maßnahme getroffen werden. So ist bei einem erkannten Baum jedenfalls ein Ausweichmanöver vorzusehen, während bei einem erkannten Vogel bei einer geringen Fluggeschwindigkeit von einem Ausweichmanöver abgesehen werden kann, da dieser bei Annäherung des Fluggeräts selbst ausweichen wird.

Weiters bevorzugt ist die Detektionseinrichtung dazu ausgebildet, aus den Laufzeiten innerhalb des genannten Teilbereichs die Peilung zu diesem Objekt in der Umgebung und dessen Größe zu bestimmen, und ein Warnsignal auszugeben und/oder eine Geschwindigkeits- und/oder Richtungsänderung des Fluggeräts zu veranlassen, wenn die genannte Peilung über eine vorgegebene Zeitspanne im Wesentlichen konstant bleibt, während die Größe zunimmt. Dadurch kann bestimmt werden, ob sich ein anderes Objekt auf Kollisionskurs mit dem Fluggerät befindet.

Bevorzugt ist der genannte Schwellwert von der Geschwindigkeit und/oder Beschleunigung des Fluggeräts abhängig. Dies ermöglicht eine adaptive Kollisionsvermeidung, so dass z.B. im Langsamflug weiter entfernte Objekte unberücksichtigt bleiben können.

In einer weiteren vorteilhaften Ausführungsform der Erfindung kann mit Hilfe einer Auswerteeinrichtung ein dreidimensionales Modell der Umgebung (eine "Punktewolke" von Entfernungsmesspunkten) anhand der Laufzeiten der außerhalb des genannten Teilbereichs ausgesandten Laserstrahlen erzeugt werden. Die Auswerteeinrichtung kann sich dabei sowohl im Fluggerät selbst als auch an einem entfernten Ort befinden, z.B. in der Fernbedienung oder an diese angeschlossen oder in einer Zentrale, an welche die Daten online oder über einen Datenträger ("offline") zur Auswertung und Erstellung des 3D-Modells gesandt werden. Die Detektionseinrichtung und die Auswerteeinrichtung können dabei auch durch ein und dieselbe Datenverarbeitungseinrichtung gebildet sein.

Gemäß einem weiteren bevorzugten Merkmal der Erfindung ist der genannte Spiegel direkt am Laserscanner gelagert. Dadurch kann der Spiegel unabhängig von der Montage des Laserscanners am Fluggerät justiert werden. Vibrationen, Fehl- oder Dejustierungen in der Montage des Laserscanners am bzw. im Fluggerät wirken sich dadurch nicht auf die relative Justierung des Spiegels gegenüber dem Laserscanner aus.

In einer weiteren vorteilhaften Variante der Erfindung ist eine Kippeinrichtung für den Spiegel vorgesehen, mittels welcher die Neigung des Spiegels relativ zur Achse, um die die Laserstrahlen herum ausgesandt werden, veränderbar ist. Die Kippeinrichtung erlaubt eine aktive Justierung oder Nachjustierung des Spiegels, sogar im Flug, z.B. mittels einer Fernsteuerung.

Die Kippeinrichtung kann zusammen mit dem Spiegel am Laserscanner montiert werden. Alternativ können die Kippeinrichtung und/oder der Spiegel jeweils am Fluggerät montiert sein, wodurch eventuelle Verkabelungen zu einem Funksendeempfänger des Fluggeräts besonders kurz gefertigt werden können. Wenn der Spiegel am Laserscanner montiert ist und die Kippeinrichtung am Fluggerät, können die Vorteile beider Ausführungsformen ausgenützt werden. Die Kippeinrichtung kann auch mehrere Komponenten umfassen, die teilweise am Fluggerät und teilweise am Laserscanner montiert sind.

In einer weiteren bevorzugten Ausführungsform ist die Kippeinrichtung dazu ausgebildet, die Neigung des Spiegels an eine momentane oder einzunehmende Flugrichtung und/oder -geschwindigkeit anzupassen. So kann auch bei einem Steig- oder Sinkflug der vom Spiegel ausgekoppelte Kollisionsdetektionsfächer in Flugrichtung blicken. Da sich überdies manche Fluggeräte wie UAVs ("Unmanned Aerial Vehicles") oder Hubschrauber in Flugrichtung nach vorne neigen, ändert sich je nach Fluggeschwindigkeit der Winkel zwischen der Flugrichtung und der genannten Achse des Laserscanners. Auch in diesem Fall passt die Kippeinrichtung die Neigung des Spiegels an eine solcherart durch Flugrichtung und/oder Fluggeschwindigkeit bedingte Neigung des Fluggeräts an. Dazu können z.B. die Messwerte von Neigungssensoren ("Inertial Measurement Units", IMUs) und/oder zeitlich veränderliche Positionsdaten eines Satellitennavigationssystems (GNSS) des Laserscanners und/oder des Fluggeräts ausgewertet werden. Wird die Neigung des Spiegels an eine erst einzunehmende Flugrichtung und/oder -geschwindigkeit angepasst, können dazu Steueraufforderungen eines Autopiloten des Fluggeräts oder über einen Sendeempfänger des Fluggeräts empfangene Steueraufforderungen verwendet werden. Die Kippeinrichtung kann somit auch unabhängig von der momentanen Flugrichtung vorausschauend ("preemptiv") für einen Flugrichtungs- oder -geschwindigkeitswechsel angesteuert werden.

Gemäß einem bevorzugten Merkmal der Erfindung kann die Kippeinrichtung auch dazu ausgebildet sein, die Neigung des Spiegels und damit die Richtung des Scanfächers periodisch zu verändern. Der Mittelwert der periodischen Veränderung kann dabei z.B. die tatsächliche Flugrichtung des Fluggeräts sein. Durch die periodische Veränderung der Neigung des Spiegels wird erreicht, dass ein ganzer Raumwinkel vor bzw. hinter dem Fluggerät zur Kollisionsvermeidung vermessen werden kann. Die Länge der Periode der Neigungsbewegung des Spiegels ist dabei bevorzugt wesentlich länger als eine Scanperiode des Laserscanners, wodurch der Raumwinkel zeilenförmig abgetastet wird.

Die Kippeinrichtung kann ferner auch dazu ausgebildet sein, den Spiegel im Wesentlichen um 90° zu kippen. Dadurch wird ermöglicht, dass die Umgebung nicht nur vor dem Fluggerät gemessen werden kann, sondern auch hinter diesem. Je nach momentaner bzw. einzunehmender Flugrichtung und -geschwindigkeit kann der Spiegel dabei auch um mehr als 90° gekippt werden, um die Neigung des Fluggeräts auszugleichen. Durch das Umklappen des Spiegels wird sowohl ein Rückwärtsflug des Fluggeräts mit Kollisionsvermeidung als auch ein Rückwärtsblick während eines Vorwärtsflugs des Fluggeräts ermöglicht.

Bevorzugt ist der Spiegel in einer normal zur Achse liegenden Schnittebene des Spiegels gekrümmt, z.B. konvex oder konkav. Ist der Spiegel konvex geformt, wird der Auffächerwinkel der vom Spiegel abgelenkten Laserstrahlen vergrößert, so dass ein größerer Bereich der Umgebung zur Kollisionsvermeidung abgetastet werden kann. Ist der Spiegel konkav geformt, kann der Auffächerwinkel der vom Spiegel abgelenkten Laserstrahlen verkleinert werden, sodass die Umgebung zur Kollisionsvermeidung mit z.B. kleinen Objekten wie Vögeln in einer höheren Auflösung vermessen werden kann.

Bevorzugt haben das Fluggerät und der Laserscanner einen gegenseitigen Montageabstand und der Spiegel befindet sich innerhalb dieses Montageabstands. Dies erlaubt einerseits eine einfache und geschützte Montage des Spiegels. Andererseits ist der Spiegel dadurch so positioniert, dass er Laserstrahlen ablenkt, die durch die Abschattungswirkung des Fluggeräts ohnehin nicht zur Vermessung der Umgebung beitragen könnten. Die Laserstrahlen aller Aussendewinkel des Laserscanners können somit entweder zur Vermessung der Umgebung oder zur Kollisionsvermeidung verwendet werden.

Die Erfindung eignet sich für alle Arten von Fluggeräten, die Laserscanner zur Vermessung mitführen, wie Flächenflugzeuge, Helikopter od.dgl. Besonders geeignet ist die Erfindung für einen Einsatz bei unbemannten Fluggeräten wie UAVs, wo das Gefährdungspotential für Dritte besonders hoch und das zusätzliche Gewicht für ein Kollisionswarnsystem besonders kritisch ist.

Die Erfindung wird nachfolgend anhand von in den beigeschlossenen Zeichnungen dargestellten Ausführungsbeispielen näher erläutert. In den Zeichnungen zeigen:
Fig. 1 ein Fluggerät mit Laserscanner gemäß der Erfindung in einer Perspektivansicht;
Fig. 2 ein Blockschaltbild des Fluggeräts mit Laserscanner von Fig. 1;
die Fig. 3a und 3b das Fluggerät mit Laserscanner der Fig. 1 und 2 in einem Vorwärtsflug (Fig. 3a) und in einem Rückwärtsflug (Fig. 3b) jeweils in einer Seitenansicht;
Fig. 4 einen Spiegel und davon abgelenkte Laserstrahlen in einer schematischen Perspektivansicht;
die Fig. 5a und 5b von gekrümmten Spiegeln abgelenkte Laserstrahlen in schematischen Ansichten;
Fig. 6 eine Vorderansicht des Laserscanners der Fig. 1 - 3 mit nur ausschnittsweise dargestelltem Fluggerät; und
Fig. 7 eine Draufsicht auf den Laserscanner entlang der Schnittlinie VII - VII von Fig. 6.

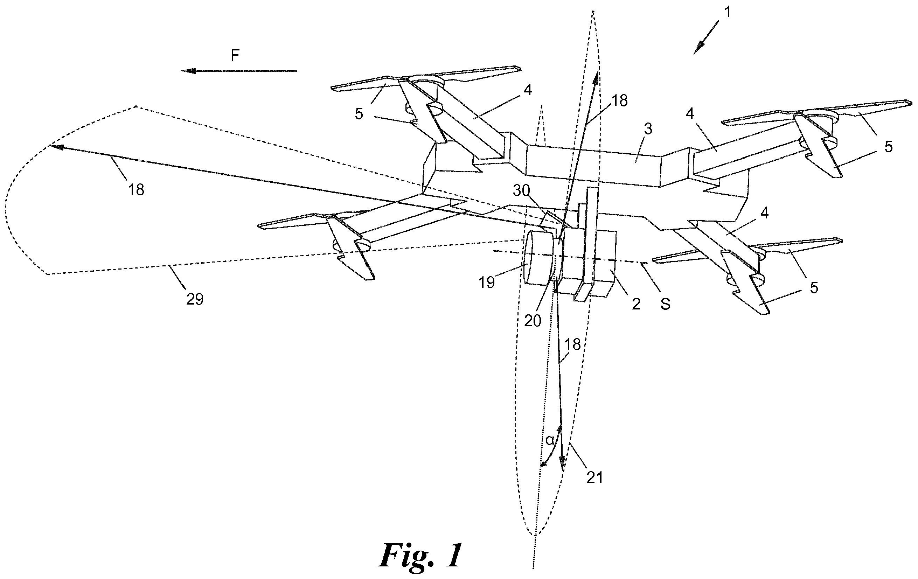

Fig. 1 zeigt ein Fluggerät 1 mit einem Laserscanner 2 zum Vermessen einer Umgebung, beispielsweise einer Landschaft, eines Tals, einer Stadt, einer Straßenschlucht, des Inneren einer Bergbaugrube oder eines Bergwerks, od.dgl. Das Fluggerät 1 ist bevorzugt, wenn auch nicht zwingend, ein unbemanntes Fluggerät ("Unmanned Aerial Vehicle", UAV) mit einem Rumpf 3, vier davon auskragenden Armen 4 und acht Rotoren 5, je zwei an einem Arm 4, ein sog. Octocopter. Es versteht sich, dass das Fluggerät 1 auch von anderem Typ sein kann, z.B. ein Bi-, Tri-, Quadro- oder Hexacopter, ein Helikopter oder ein Flächenflugzeug, jeweils bemannt oder unbemannt.

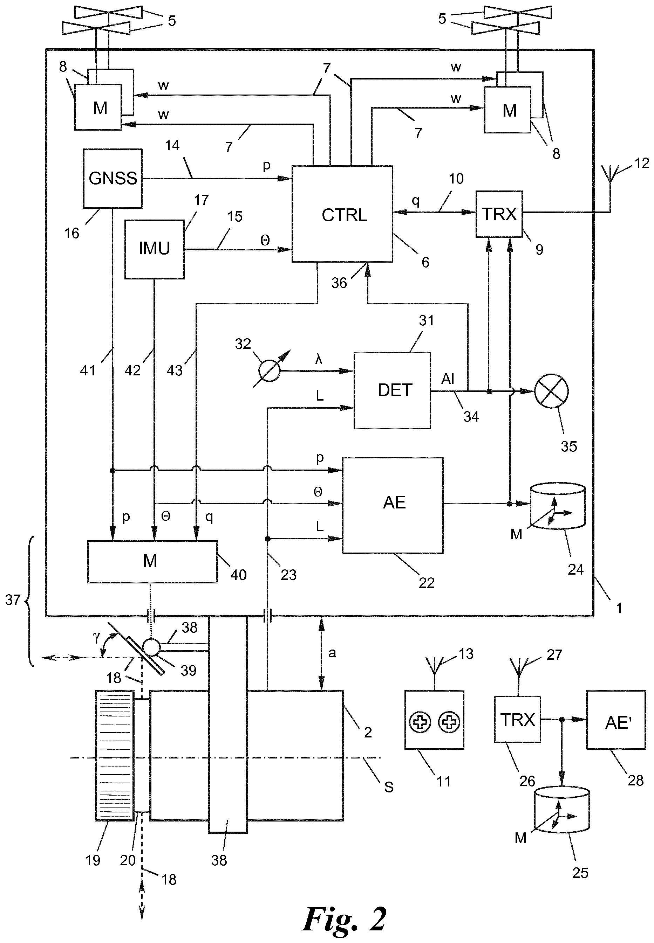

Gemäß Fig. 2 hat ein solches Fluggerät 1 eine Steuerung 6, die Steuerwerte w über Steuerleitungen 7 an Motoren 8 der Rotoren 5 zu deren Steuerung sendet. Dazu verfügt die Steuerung 6 über einen Autopiloten oder empfängt Steuersignale q über einen Sendeempfänger 9 mit Steuerleitung 10 von einer Fernbedienung 11. Der Sendeempfänger 9 und die Fernbedienung 11 sind über eine Funkverbindung verbunden und verwenden dazu jeweils Antennen 12, 13. Weiters benützt das Fluggerät 1 Positionssignale p bzw. Lagedaten θ eines einer über Leitungen 14, 15 angeschlossenen Satellitennavigationssystems ("Global Navigation Satellite System", GNSS) 16 bzw. Trägheitsmesseinrichtung (Inertial Measurment Unit, IMU) 17, um das Fluggerät 1 zu steuern.

Der genannte Laserscanner 2 sendet eine Vielzahl von Laserstrahlen 18 in unterschiedlichen Aussendewinkeln α rund um eine Achse S aus (Fig. 1). Als Referenznullpunkt für die Aussendewinkel α kann eine beliebige Richtung gewählt werden, beispielsweise eine vertikale Aussenderichtung. Der Laserscanner 2 erzeugt dazu z.B. einen einzigen gepulsten oder modulierten Laserstrahl 18, der durch eine im Scannerkopf 19 rotierende oder schwingende Optik (nicht gezeigt) abgelenkt wird, wodurch der Laserstrahl 18 um die Achse S schwingt oder rotiert. Alternativ kann der Laserscanner 2 über eine Vielzahl von Laserquellen verfügen und für unterschiedliche Aussendewinkel α unterschiedliche Laserquellen einsetzen.

Wie in Fig. 1 gezeigt, ist der Laserscanner 1 beispielsweise ein 2D-Laserscanner mit einem 360°-Rundumaustrittsfenster 20 für einen um die Achse S rotierenden Laserstrahl 18. Unter einem "2D-Laserscanner" wird in der vorliegenden Beschreibung ein Laserscanner verstanden, dessen Laserstrahlen 18 in einer Abtastebene normal oder schräg zur Achse S liegen, um eine Scanscheibe 21 auf die Umgebung auszusenden. Aus den Laufzeiten L der an der Umgebung reflektierten Laserstrahlen 18 kann ein 2D-Profil der Umgebung zu erstellt werden, welches der Schnittlinie der Abtastebene mit dem Umgebungsrelief entspricht. Durch Fortbewegen des Fluggeräts 1 mitsamt dem Laserscanner 2 in einer abtastebenenfremden Flugrichtung F kann dann aus mehreren aufeinanderfolgenden 2D-Profilen mittels einer Auswerteeinrichtung 22 (Fig. 2) ein 3D-Modell M ("Abtastpunktewolke") der Umgebung erstellt werden.

Die Scanscheibe 21 des 2D-Laserscanners 2 kann dabei teilkreisförmig (sektorförmig) sein oder bevorzugt vollkreisförmig, in welch letzterem Fall der 2D-Laserscanner 2 auch als "360°-2D-Laserscanner" bezeichnet wird. Ein Beispiel eines derartigen 360°-2D-Laserscanners ist das Produkt mit der Markenbezeichnung VUX® der Firma RIEGL Laser Measurement Systems GmbH in Horn, Österreich.

Um das 3D-Modell M zu erstellen, empfängt die Auswerteeinrichtung 22 die vom Laserscanner 2 gemessenen Laufzeiten L und Aussendewinkel α der Laserstrahlen 18 über eine Leitung 23 und verknüpft sie mit den Positionsdaten p des Satellitennavigationssystems 16 und/oder den Lagedaten θ der Trägheitsmesseinrichtung 17 des Fluggeräts 1. Alternativ könnte der Laserscanner 2 ein eigenes Satellitennavigationssystem und/oder eine eigene Trägheitsmesseinrichtung aufweisen (nicht gezeigt) und so als autonome Einheit ausgebildet sein. Zu diesem Zweck könnte die Auswerteeinheit 22 anstatt im Fluggerät 1 auch direkt im Laserscanner ausgebildet oder an diesen extern angeschlossen sein.

Die Auswerteeinrichtung 22 kann das erstellte dreidimensionale Modell M in einem Speicher 24 des Fluggeräts 1 oder des Laserscanners 2 ablegen oder über den Sendeempfänger 9 an einen externen Speicher 25 senden, der zu diesem Zweck über einen Sendeempfänger 26 mit Antenne 27 verfügt. Alternativ könnten die Rohdaten, d.h. Laufzeiten L, Positionsdaten p, Lagedaten θ und zugehörigen Aussendewinkel α, über die Sendeempfänger 9, 26 auch an eine externe Auswerteeinrichtung 28 zur Online- oder Offline-Auswertung gesendet werden. Anstelle des Sendeempfängers 9 des Fluggeräts 1 könnte der Laserscanner 2 auch einen eigenen Sendeempfänger haben. Die Fernbedienung 11, der externe Speicher 25, der Sendeempfänger 26 und/oder die externe zweite Auswerteeinrichtung 28 können auch als Einheit ausgebildet sein.

Zur Erweiterung des vorgestellten Systems um die Funktionalität eines Kollisionswarn- bzw. -vermeidungssystem für das Fluggerät 1 dienen die nun im Folgenden beschriebenen Komponenten.

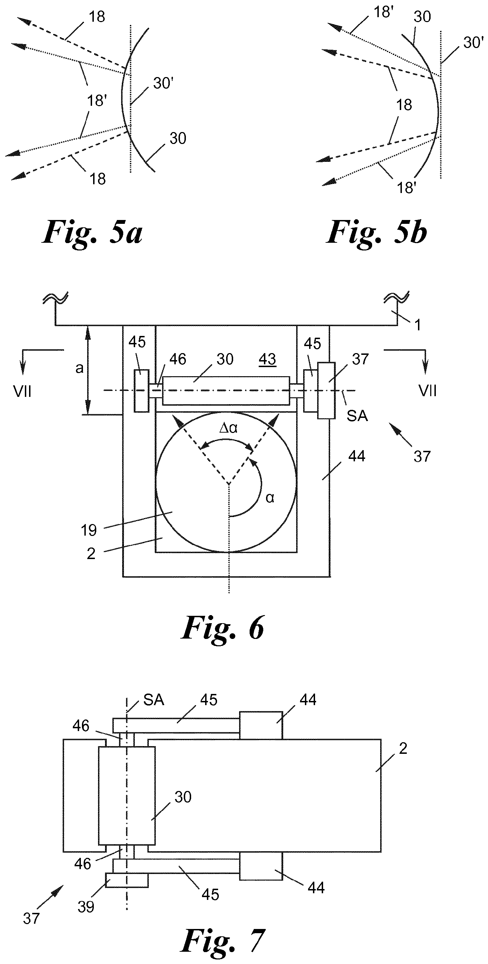

Wie insbesondere aus den Fig. 1 und 6 ersichtlich, ist ein Spiegel 30 im Strahlengang der Laserstrahlen 18 eines vorbestimmten Teilbereichs Δα von Aussendewinkeln α angeordnet. Die im Winkelbereich Δα um die Achse S ausgesandten Laserstrahlen 6 werden durch den Spiegel 30 in eine zur Achse S nicht-normale Ebene abgelenkt und bilden einen eigenen Scanfächer 29, der gleichsam aus der Scanscheibe 21 "ausgekoppelt" ist. Der Scanfächer 29 liegt bevorzugt parallel zur Flugrichtung F des Fluggeräts 1, wie unten im Detail erläutert.

In gleicher Weise wie für jene Laserstrahlen 18 der Scanscheibe 21, die nicht vom Spiegel 30 abgelenkt werden, ermittelt der Laserscanner 2 auch Laufzeiten L und Aussendewinkel α für die vom Spiegel 30 abgelenkten Laserstrahlen 18 des Aussendewinkel-Teilbereichs Δα. Der Laserscanner 2 liefert diese Laufzeiten L über die Leitung 23 an eine Detektionseinrichtung 31, die sich im Fluggerät 1 oder im Laserscanner 2 selbst befinden kann.

Die Detektionseinrichtung 31 vergleicht die Laufzeiten L des Winkelbereichs Δα fortlaufend - z.B. auch unter zeitlicher Mittelung über ein gleitendes Zeitfenster - mit einem Schwellwert A aus einem einstellbaren Schwellwertgeber 32. Wenn eine oder mehrere (gegebenenfalls auch gemittelte) Laufzeit(en) L den Schwellwert A unterschreitet bzw. unterschreiten, gibt die Detektionseinrichtung 31 auf einer Leitung 34 ein Warnsignal Al aus, z.B. an eine Ausgabeeinrichtung 35. Die Ausgabeeinrichtung 35 kann beispielsweise eine optische oder akustische Signalisierungseinrichtung für den Piloten des Fluggeräts 1 oder Personen oder Tiere in der Umgebung des Fluggeräts 1 sein. Alternativ oder zusätzlich kann das Warnsignal Al auch über den Sendeempfänger 9 an die Fernbedienung 11 und/oder die zweite Auswerteeinrichtung 28 gesandt werden, um den Bediener oder andere Personen am Boden zu warnen.

Das Warnsignal Al kann alternativ oder zusätzlich auch dazu verwendet werden, eine Geschwindigkeits- und/oder Richtungsänderung des Fluggeräts 1 zu veranlassen, und kann zu diesem Zweck einem Steuereingang 36 der Steuerung 6 des Fluggeräts 1 zugeführt werden. Die Steuerung 6 bzw. ein darin enthaltener Autopilot veranlasst dann automatisch z.B. ein Ausweichmanöver, Verlangsamen oder "Anhalten" des Fluggeräts in der Luft, um eine Kollision mit einem vom Scanfächer 29 auf diese Weise detektierten Objekt zu verhindern.

Der Schwellwert A, welcher den Abstand bestimmt, innerhalb dessen ein Umgebungsobjekt als potentiell kollisionsgefährdend detektiert wird, kann fest vorgeben sein, oder vom Benutzer (auch über die Fernbedienung 11) vorgewählt werden, oder aber von der Geschwindigkeit und/oder Beschleunigung des Fluggeräts 1 abhängen, um die Kollisionswarnung bzw. -vermeidung adaptiv an die Flugsituation anzupassen.

Aus einer Folge von Laufzeiten L verschiedener innerhalb des genannten Teilbereichs Δα ausgesandter Laserstrahlen 18 kann die Detektionseinrichtung 31 zudem einzelne Objekte wie Vögel, andere unbemannte Fluggeräte, Bäume o.ä. bestimmen, die sich deutlich vom Rest der Umgebung abheben. Anhand der Größe und/oder der mittels der Laufzeiten L ermittelten Form des Objekts kann dieses klassifiziert werden, z.B. anhand vorermittelter Größen oder Formen, die in einer Tabelle gespeichert sind. Je nach Klassifikation des Objekts kann eine unterschiedliche Maßnahme getroffen werden, z.B. entweder ein Warnsignal ausgegeben oder ein Ausweichmanöver veranlasst werden.

Ferner kann die Peilung eines solcherart detektierten Objekts ermittelt werden, um einen allfälligen Kollisionskurs des Objekts zu detektieren. Die Peilung eines Objekts ist die relative Winkelposition des Objekts zur Flugrichtung F des Fluggeräts. Wenn die Peilung über eine vorgegebene Beobachtungszeitspanne, z.B. mehrere Sekunden oder Minuten, konstant bleibt und während dieser Zeit die beobachtete ("scheinbare") Größe des Objekts nur zunimmt, liegt ein Kollisionskurs des Objekts vor. In diesem Fall können ein gesonderter (Vorab-)Alarm ausgegeben und/oder eine vorsorgliche Richtungs- und/oder Geschwindigkeitsänderung veranlasst werden; oder es werden für bereits als schwellwertunterschreitend detektierte Laufzeiten L das Warnsignal Al bzw. die Richtungs- und/oder Geschwindigkeitsänderung unterdrückt, wenn kein solcher Kollisionskurs vorliegt.

Ferner kann die Geschwindigkeit des Objekts ermittelt werden, wenn die Laufzeiten L unter Berücksichtigung der Eigengeschwindigkeit des Fluggeräts 1 über eine vorgegebene Zeitspanne gemessen werden.

In einer einfachen praktischen Ausführung kann der Spiegel 30 starr am Fluggerät 1 oder - bevorzugt - am Laserscanner 2 montiert sein, wodurch sich ein fixer Neigungswinkel γ des Spiegels 30 bezüglich der Achse S ergibt. Die Neigung γ des Spiegels 30 wird dabei z.B. mittels einer Justierschraube so eingestellt, dass der Spiegel 30 die im genannten Teilbereich Δα ausgesandten Laserstrahlen 18 beispielsweise in eine Ebene ablenkt, die zu einer vorbestimmten Flugrichtung F parallel ist.

Alternativ kann der Spiegel 30 beweglich am Fluggerät 1 und/oder dem Laserscanner 2 gelagert und mit einer Kippeinrichtung 37 versehen sein, mittels welcher sein Neigungswinkel γ um eine zur Achse S etwa normale Spiegelachse SA aktiv verstellt werden kann. Die Kippeinrichtung 37 umfasst eine Schwenklagerung 38 für den Spiegel 30, einen Aktor 39 zum Verschwenken um die Spiegelachse SA und eine Regeleinheit 40 zum Steuern des Aktors 39. Die Komponenten 38, 39 und 40 können jeweils am Laserscanner 2 und/oder am Fluggerät 1 verbaut sein.

Die Kippeinrichtung 37, genauer ihre Regeleinheit 40, erhält über Leitungen 41, 42, 43 Positionsdaten p des Satellitennavigationssystems 16, Lagedaten θ des Neigungssensors 17 und/oder Steuerdaten q der Steuerung 6, welch letztere z.B. für eine einzunehmende Flugrichtung und/oder -geschwindigkeit repräsentativ sind, wie sie vom Autopiloten der Steuerung 6 oder der Fernbedienung 11 vorgegeben werden. Die Positions- und Lagedaten p, θ könnten alternativ auch von einem internen Satellitennavigationssystem oder einer Trägheitsmesseinrichtung des Laserscanners stammen (nicht gezeigt).

Auf Basis der Daten p, θ und/oder q kann die Regeleinheit 40 der Kippeinrichtung 37 über den Aktor 39 die Neigung γ des Spiegels 30 um seine Achse SA wie folgt an eine momentane und/oder einzunehmende Flugsituation des Fluggeräts 1 anpassen.

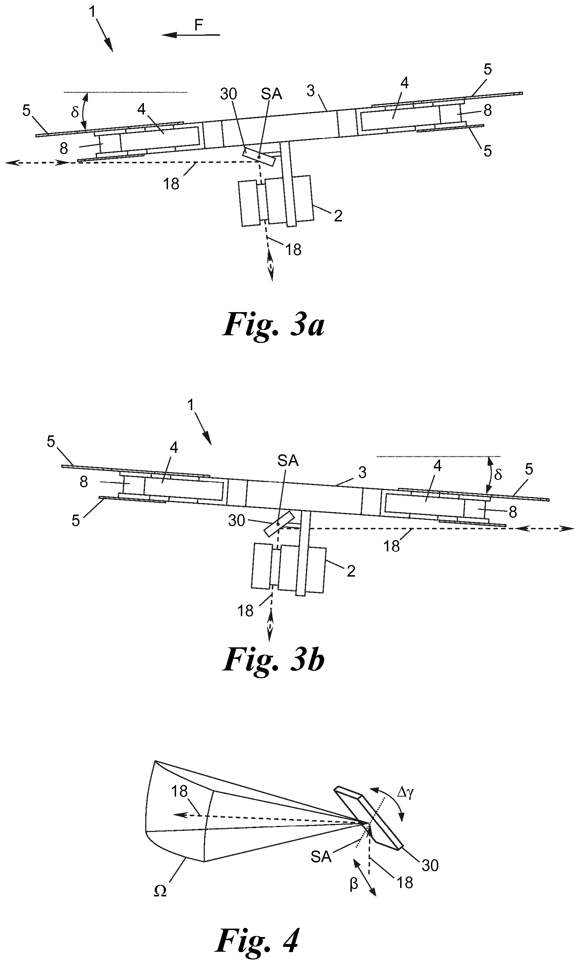

Fig. 3a zeigt schematisch, dass sich das Fluggerät 1 beim Vorwärtsflug um einen Winkel δ zur Horizontalen neigt. Befindet sich das Fluggerät in einer Horizontalen, d.h. ist der Flugwinkel δ gleich Null, wird der Kippwinkel γ des Spiegels 30 in der Regel +45° zur Achse S betragen. Fliegt das Fluggerät 1 mit einer Geschwindigkeit ungleich Null, d.h. ist der Flugwinkel δ ungleich Null, so beträgt der Kippwinkel γ des Spiegels 30 in der Regel über 45°. Um den Flugwinkel δ des Fluggeräts 1 auszugleichen, adjustiert die Kippeinrichtung 37 den Kippwinkel γ des Spiegels 30 derart, dass der Scanfächer 29 wieder parallel zur Flugrichtung F liegt. Der Flugwinkel δ kann dabei aus den Neigungssensordaten θ und/oder aus einer Veränderung der Positionsdaten p ermittelt werden.

Fig. 3b zeigt einen Rückwärtsflug des Fluggeräts 1. Der Spiegel 30 kann dazu um 90° gekippt bzw. umgeklappt werden, d.h. der Kippwinkel γ beträgt bei niedrigen Geschwindigkeiten etwa -45° zur Achse S. Um eine höhere Rückwärts-Fluggeschwindigkeit des Fluggeräts 1 zu kompensieren, kann der Spiegel 30 um einen zusätzlichen Winkelanteil verkippt werden, der der Geschwindigkeit des Fluggeräts 1 entspricht, wie oben für den Vorwärtsflug beschrieben.

Fig. 4 zeigt eine weitere Anwendungsmöglichkeit und Betriebsart der Kippeinrichtung 37. Bei dieser Ausführungsform wird der Spiegel 30 periodisch um einen Schwingwinkel Δγ verkippt, so dass ein Raumwinkel Ω der Umgebung vermessen werden kann. Um die Umgebung zeilenförmig zu vermessen, ist die Periode des Schwingwinkels Δγ bevorzugt wesentlich länger als eine Periode des Laserscanners 2, z.B. 100-mal länger, um z.B. 100 Zeilen pro Periode des Schwingwinkels Δγ abzutasten. Die Ausführungsform von Fig. 4, d.h. ihr Kippmuster, kann auch mit jener der Fig. 3a und 3b kombiniert werden.

Insbesondere kann die Detektionseinrichtung 31 bei einer Abtastung des Raumwinkels Ω die Form eines Objekts auch dreidimensional erkennen und dieses somit leichter wie oben beschrieben klassifizieren. Zudem kann mittels des Schwingwinkels Δγ des Spiegels 30 auch die Höhe von Objekten erfasst werden, wodurch diese als Ausweichmanöver überflogen werden können.

Die Fig. 5a und 5b zeigen eine weitere Ausführungsform für den Spiegel 30. Wie in den Fig. 5a und 5b veranschaulicht, kann der Spiegel 30 in einer normal zur Achse S liegenden Schnittebene des Spiegels 30 eben oder gekrümmt sein. Bei einem ebenen Spiegel 30' (in den Fig. 5a und 5b punktiert skizziert) ergibt sich ein Spannwinkel des Scanfächers 21 wie durch die vom ebenen Spiegel 30' abgelenkten Laserstrahlen 18' angedeutet. Dieser Spannwinkel kann vergrößert oder verkleinert werden, wenn der Spiegel 30 in der genannten Ebene konvex (Fig. 5a) oder konkav (Fig. 5b) ist. Der Spiegel 30 kann dabei sowohl in nur einer Richtung, d.h. torisch, gekrümmt sein als auch in zwei Richtungen, d.h. sphärisch.

Die Fig. 6 und 7 zeigen eine beispielhafte Anbringung des Spiegels 30 und der Kippeinrichtung 37 am Laserscanner 2. Der Laserscanner 2 ist hier in einem etwa U-förmigen, eine Aussparung 43 bildenden Montagebügel 44 an der Unterseite des Fluggeräts 1 angebracht ist. Am Montagebügel 44 ansetzende Haltearme 45 lagern eine Schwenkachse 46, welche den Spiegel 30 trägt. Die Schwenkachse 46 wird von dem an einem Haltearm 45 montierten Motor (Aktor) 39 der Kippeinrichtung 37 angetrieben. Der U-förmige Montagebügel 44 ermöglicht dabei durch die Aussparung 43 in seiner Mitte das Kippen des Spiegels 30 um 90° oder mehr, um freien Blick in Rückwärtsrichtung (Fig. 3b) zu gewährleisten.

Wie aus dem gezeigten Beispiel ersichtlich, sind das Fluggerät 1 und der Laserscanner 2 bevorzugt in einem Montageabstand a voneinander beabstandet und der Spiegel 30 befindet sich bevorzugt innerhalb dieses Montageabstands a. Dadurch deckt der Spiegel 30 einen Teil oder bevorzugt gerade jenen Winkelbereich Δα der Laserstrahlen 18 ab, über welchem sich ohnehin das Fluggerät 1 befindet, d.h. wo durch das Fluggerät 1 ein Abschattungsbereich für die volle Scanscheibe 21 entstehen würde. Der Laserscanner 2 kann daher jene Laserstrahlen 18, die ohne Spiegel 30 vom Fluggerät 1 reflektiert würden, durch den Einsatz des Spiegels 30 zur Kollisionswarnung verwenden.

Die Erfindung ist nicht auf die dargestellten Ausführungsformen beschränkt, sondern umfasst alle Varianten, Modifikationen und Kombinationen, die in den Rahmen der angeschlossenen Ansprüche fallen.

## Patentansprüche

1. Fluggerät mit einem Laserscanner zum Vermessen einer Umgebung,
wobei der Laserscanner (2) dazu ausgebildet ist, Laserstrahlen (18) mit unterschiedlichen Aussendewinkeln (α) um eine Achse (S) auszusenden,
wobei ein Spiegel (30) im Strahlengang der Laserstrahlen (18) eines vorbestimmten Teilbereichs (Δα) von Aussendewinkeln (α) angeordnet ist,
wobei der Laserscanner (1) dazu ausgebildet ist, die Laufzeiten (L) sowohl von innerhalb des genannten Teilbereichs (Δα) ausgesandten Laserstrahlen (18) als auch von außerhalb des genannten Teilbereichs (Δα) ausgesandten Laserstrahlen (18) anhand deren Reflexionen an der Umgebung zu ermitteln,
**dadurch gekennzeichnet, dass** der Spiegel (30) die im genannten Teilbereich (Δα) ausgesandten Laserstrahlen (18) in eine Ebene ablenkt, die zu einer vorbestimmten horizontalen Flugrichtung (F) parallel ist,
wobei der genannte Teilbereich (Δα) jene Laserstrahlen (18) umfasst, die ohne Spiegel (30) vom Fluggerät (1) reflektiert würden.

2. Fluggerät nach Anspruch 1, **dadurch gekennzeichnet, dass** der Laserscanner (2) dazu ausgebildet ist, die Laserstrahlen (18) unterschiedlicher Aussendewinkel (Δα) mittels eines einzigen, um die Achse (S) rotierenden oder schwingenden Laserstrahls zu erzeugen.

3. Fluggerät nach Anspruch 1 oder 2, **gekennzeichnet durch** eine Detektionseinrichtung (31), die dazu ausgebildet ist, ein Warnsignal auszugeben oder eine Geschwindigkeits- und/oder Richtungsänderung des Fluggeräts (1) zu veranlassen, wenn die Laufzeit (L) zumindest eines innerhalb des genannten Teilbereichs (Δα) ausgesandten Laserstrahls (18) einen Schwellwert (λ) unterschreitet.

4. Fluggerät nach Anspruch 3, **dadurch gekennzeichnet, dass** die Detektionseinrichtung dazu ausgebildet ist, die Größe und/oder Form eines Objekts der Umgebung aus einer Folge von Laufzeiten (L) verschiedener innerhalb des genannten Teilbereichs (Δα) ausgesandter Laserstrahlen (18) zu bestimmen und daraus das Objekt zu klassifizieren.

5. Fluggerät nach Anspruch 3 oder 4, **dadurch gekennzeichnet, dass** die Detektionseinrichtung dazu ausgebildet ist, aus den Laufzeiten (L) innerhalb des genannten Teilbereichs (Δα) die Peilung zu diesem Objekt in der Umgebung und dessen Größe zu bestimmen, und ein Warnsignal auszugeben und/oder eine Geschwindigkeits- und/oder Richtungsänderung des Fluggeräts (1) zu veranlassen, wenn die genannte Peilung über eine vorgegebene Zeitspanne im Wesentlichen konstant bleibt, während die Größe zunimmt.

6. Fluggerät nach einem der Ansprüche 3 bis 5, **dadurch gekennzeichnet, dass** der Schwellwert (A) von einer Geschwindigkeit und/oder Beschleunigung des Fluggeräts (1) abhängig ist.

7. Fluggerät nach einem der Ansprüche 1 bis 6, **gekennzeichnet durch** eine Auswerteeinrichtung (22), die dazu ausgebildet ist, ein dreidimensionales Modell (M) der Umgebung anhand von Laufzeiten (L) der außerhalb des genannten Teilbereichs (Δα) ausgesandten Laserstrahlen (18) zu erzeugen.

8. Fluggerät nach einem der Ansprüche 1 bis 7, **dadurch gekennzeichnet, dass** der Spiegel (30) am Laserscanner (1) gelagert ist.

9. Fluggerät nach einem der Ansprüche 1 bis 7, **gekennzeichnet durch** eine Kippeinrichtung (37) des Spiegels (30), mittels welcher die Neigung (γ) des Spiegels (30) relativ zur Achse (S) veränderbar ist.

10. Fluggerät nach Anspruch 9, **dadurch gekennzeichnet, dass** die Kippeinrichtung (37) dazu ausgebildet ist, die Neigung (γ) des Spiegels (30) an eine momentane oder einzunehmende Flugrichtung (F) und/oder -geschwindigkeit anzupassen.

11. Fluggerät nach Anspruch 10, **dadurch gekennzeichnet, dass** die Kippeinrichtung (37) dazu ausgebildet ist, die Neigung (γ) des Spiegels (30) periodisch zu verändern.

12. Fluggerät nach einem der Ansprüche 9 bis 11, **dadurch gekennzeichnet, dass** die Kippeinrichtung (37) dazu ausgebildet ist, den Spiegel (30) um mehr als 90° zu kippen.

13. Fluggerät nach einem der Ansprüche 1 bis 12, **dadurch gekennzeichnet, dass** der Spiegel (30) in einer normal zur Achse (S) liegenden Schnittebene des Spiegels (30) gekrümmt ist.

14. Fluggerät nach einem der Ansprüche 1 bis 13, **dadurch gekennzeichnet, dass** der Rumpf (3) des Fluggeräts (1) und der Laserscanner (2) in einem Montageabstand (a) voneinander beabstandet sind und sich der Spiegel (30) innerhalb dieses Montageabstands (a) befindet.

## Claims

1. Aircraft with a laser scanner for measuring a surrounding,
wherein the laser scanner (2) is configured to emit laser beams (18) at different emission angles (α) about an axis (S),
wherein a mirror (30) is located in the optical path of the laser beams (18) in a predetermined subrange (Δα) of emission angles (α),
wherein the laser scanner (1) is configured to determine the times of flight (L) of laser beams (18) emitted within the said subrange (Δα) as well as of laser beams (18) emitted outside said subrange (Δα) by means of their reflections on the surrounding,
**characterized in that** the mirror (30) deflects the laser beams (18) emitted in said subrange (Δα) into a plane that is parallel to a predetermined horizontal flight direction (F),
wherein said subrange (Δα) comprises those laser beams (18) which would be reflected by the aircraft (1) without the mirror (30).

2. Aircraft according to claim 1, **characterized in that** the laser scanner (2) is configured to generate the laser beams (18) of different emission angles (Δα) by means of a single laser beam rotating or vibrating about the axis (S).

3. Aircraft according to claim 1 or 2, **characterized by** a detection unit (31) which is configured to output a warning signal or cause a change of velocity and/or direction of the aircraft (1) when the time of flight (L) of at least one laser beam (18) emitted within said subrange (Δα) falls below a threshold (A).

4. Aircraft according to claim 3, **characterized in that** the detection unit is configured to determine the size and/or shape of an object of the surrounding from a sequence of times of flight (L) of different laser beams (18) emitted within said subrange (Δα) and to classify the object based thereon.

5. Aircraft according to claim 3 or 4, **characterized in that** the detection unit is configured to determine the bearing to this object in the surrounding and its size by the times of flight (L) within said subrange (Δα) and to output a warning signal and/or to cause a change of the velocity and/or direction of the aircraft (1) when said bearing is substantially constant for a predetermined time interval while the size increases.

6. Aircraft according to any one of the claims 3 to 5, **characterized in that** the threshold (A) depends on a velocity and/or an acceleration of the aircraft (1).

7. Aircraft according to any one of the claims 1 to 6, **characterized by** an evaluation unit (22) which is configured to generate a three-dimensional model (M) of the surrounding by means of the times of flight (L) of the laser beams (18) emitted outside said subrange (Δα).

8. Aircraft according to any one of the claims 1 to 7, **characterized in that** the mirror (30) is mounted on the laser scanner (1).

9. Aircraft according to any one of the claims 1 to 7, **characterized by** a tilting unit (37) of the mirror (30) by which the tilt (γ) of the mirror (30) relative to the axis (S) is changeable.

10. Aircraft according to claim 9, **characterized in that** the tilting unit (37) is configured to adapt the tilt (γ) of the mirror (30) to a current or intended flight direction (F) and/or flight velocity.

11. Aircraft according to claim 10, **characterized in that** the tilting unit (37) is configured to periodically modify the tilt (γ) of the mirror (30).

12. Aircraft according to any one of the claims 9 to 11, **characterized in that** the tilting unit (37) is configured to tilt the mirror (30) by more than 90°.

13. Aircraft according to any one of the claims 1 to 12, **characterized in that** the mirror (30) is curved in an intersection plane of the mirror (30) which plane is normal to the axis (S) .

14. Aircraft according to any one of the claims 1 to 13, **characterized in that** the fuselage (3) of the aircraft (1) and the laser scanner (2) are distanced from each other in a mounting distance (a), and **in that** the mirror (30) is located within this mounting distance (a).

## Revendications

1. Aéronef doté d'un scanner laser pour la mesure d'un environnement,
où le scanner laser (2) est conçu pour émettre des rayons laser (18) avec divers angles d'émission (α) autour d'un axe (S),
où un miroir (30) est disposé sur le trajet des rayons laser (18) d'un domaine partiel (Δα) prédéterminé d'angles d'émission (a),
où le scanner laser (1) est conçu pour déterminer les temps de transit (L) des rayons laser (18) émis à la fois à l'intérieur dudit domaine partiel (Δα) et également des rayons laser (18) émis à l'extérieur dudit domaine partiel (Δα) à l'aide de leurs réflexions sur l'environnement,
**caractérisé en ce que** le miroir (30) dévie les rayons laser (18) émis à l'intérieure dudit domaine partiel (Δα) dans un plan qui est parallèle à une direction de vol (F) horizontale prédéterminée,
où ledit domaine partiel (Δα) comprend les rayons laser (18) en question qui auraient été réfléchis par l'aéronef (1) sans miroir (30).

2. Aéronef selon la revendication 1, **caractérisé en ce que** le scanner laser (2) est conçu pour générer les rayons laser (18) à divers angles d'émission (Δα) au moyen d'un rayon laser unique en rotation ou vibrant autour de l'axe (S).

3. Aéronef selon la revendication 1 ou 2, **caractérisé par** un dispositif de détection (31) qui est conçu pour émettre un signal d'avertissement ou provoquer une modification de la vitesse et/ou de la direction de l'aéronef (1) lorsque le temps de transit (L) d'au moins un rayon laser (18) émis à l'intérieur dudit domaine partiel (Δα) est en-dessous d'une valeur de seuil (λ).

4. Aéronef selon la revendication 3, **caractérisé en ce que** le dispositif de détection est conçu pour déterminer la taille et/ou la forme d'un objet de l'environnement à partir d'une suite des temps de transit (L) de divers rayons laser (18) émis à l'intérieur dudit dans ledit domaine partiel (Δα) et classer l'objet à partir de ceux-ci.

5. Aéronef selon la revendication 3 ou 4, **caractérisé en ce que** le dispositif de détection est conçu pour déterminer le repérage concernant cet objet dans l'environnement et sa taille à partir des temps de transit (L) à l'intérieur dudit domaine partiel (Δα) et pour émettre un signal d'avertissement et/ou provoquer une modification de la vitesse et/ou de la direction de l'aéronef (1) lorsque ledit repérage reste essentiellement constant sur un intervalle de temps prédéfini pendant que la taille augmente.

6. Aéronef selon l'une des revendications 3 à 5, **caractérisé en ce que** la valeur de seuil (λ) est dépendante d'une vitesse et/ou d'une accélération de l'aéronef (1).

7. Aéronef selon l'une des revendications 1 à 6, **caractérisé par** un dispositif d'exploitation (22) qui est conçu pour générer un modèle tridimensionnel (M) de l'environnement à l'aide de temps de transit (L) des rayons laser (18) émis à l'extérieur dudit domaine partiel (Δα).

8. Aéronef selon l'une des revendications 1 à 7, **caractérisé en ce que** le miroir (30) est logé sur le scanner laser (1) .

9. Aéronef selon l'une des revendications 1 à 7, **caractérisé par** un dispositif de basculement (37) du miroir (30) au moyen duquel l'inclinaison (y) du miroir (30) par rapport à l'axe (S) est modifiable.

10. Aéronef selon la revendication 9, **caractérisé en ce que** le dispositif de basculement (37) est conçu pour adapter l'inclinaison (y) du miroir (30) à une direction de vol (F) et/ou une vitesse de vol momentanée ou à prendre.

11. Aéronef selon la revendication 10, **caractérisé en ce que** le dispositif de basculement (37) est conçu pour modifier périodiquement l'inclinaison (y) du miroir (30).

12. Aéronef selon l'une des revendications 9 à 11, **caractérisé en ce que** le dispositif de basculement (37) est conçu pour basculer le miroir (30) de plus de 90°.

13. Aéronef selon l'une des revendications 1 à 12, **caractérisé en ce que** le miroir (30) est incurvé dans un plan en coupe du miroir (30) se situant normalement par rapport à l'axe (S) .

14. Aéronef selon l'une des revendications 1 à 13, **caractérisé en ce que** le tronc (3) de l'aéronef (1) et le scanner laser (2) sont espacés l'un par rapport à l'autre avec une distance de montage (a) et le miroir (30) se trouve à l'intérieur de cette distance de montage (a).
